# EUROPEAN PATENT SPECIFICATION

(11) **EP 3 160 170 B1**
(45) Date of publication and mention of the grant of the patent: **08.01.2020**
(21) Application number: 14895865.5
(22) Date of filing: 11.10.2014
(51) Int. Cl.: H04W 4/08, H04L 29/06

(54) **INFORMATION SHARING METHOD, SYSTEM AND DEVICE, AND COMPUTER STORAGE MEDIUM**
VERFAHREN ZUR GEMEINSAMEN INFORMATIONSNUTZUNG, SYSTEM UND VORRICHTUNG SOWIE COMPUTERSPEICHERMEDIUM
PROCÉDÉ, SYSTÈME ET DISPOSITIF DE PARTAGE D'INFORMATIONS, ET SUPPORT DE STOCKAGE INFORMATIQUE

(30) Priority: 23.06.2014 CN 201410283551
(43) Date of publication of application: 26.04.2017
(73) Proprietor: ZTE Corporation, Shenzhen, Guangdong 518057 (CN)
(72) Inventor: ZHAO, Jin, Shenzhen Guangdong 518057 (CN); ZHANG, Xiaoyong, Shenzhen Guangdong 518057 (CN)
(74) Representative: Petraz, Gilberto Luigi
(86) International application number: PCT/CN2014/088385
(87) International publication number: WO 2015/196626

(56) References cited:
- WO-A1-2005/112388
- WO-A1-2009/122321
- WO-A1-2013/089671
- CN-A- 101 064 747
- CN-A- 101 800 951
- CN-A- 102 523 560
- CN-A- 103 067 478

## Description

### Technical Field

The present invention relates to an information sharing technology, and particularly to an information sharing method, system and device, and a computer storage medium.

### Background of the Related Art

The quantity of information for interacting between users via mobile terminals is increasing. Usually, a contact list of each user may contain hundreds of pieces of information. When a personal communication mode of a user changes, e.g., a phone number is changed, the user has to inform related contacts of changed contact information of the user itself one by one. This manner wastes both time and labor.

As for the abovementioned problem, there is no effective solution existing in the related technology.

The document WO 2009/122321 A1 discloses a method and communication server for updating a user identifier, wherein the server detects that a user involved in a new communication has changed an old user identifier for a new identifier, the server also triggers a search for pre-defined groups containing the old user identifier and when determining that the user is part of one or more pre-defined groups, instructing Q an update of the one or more pre-defmed groups with the new user identifier.

The document WO 2005/112388 A1 discloses updating data between the mobile devices belonging to a given user group, in a mobile device (301, 302) according to the embodiments of the invention, there can be recorded information (406) of the members of a given user group, and a connection can be established from the device (301, 302) to other devices (303, 304, 401) of the user group members, in addition, the device includes means for defining the changing information as update data (407) related to said user group, and means for transmitting (303, 304, 401) the update data automatically to each device belonging to the user group through a defined connection bus, the device also includes means for receiving (303, 304, 401) the data defined to be updated, and means for saving (406, 407) the received update data in the device.

The document WO 2013/089671 A1 discloses a method and apparatus for allowing users in a user group to interact and exchange media content characteristics in a network as a part of the entertainment experience is described, the method (500) and apparatus include identifying (510) a group of users from a plurality of users in a network, detecting (520) a change in at least one content consumption characteristic by a first user, the content consumption characteristic associated with the first user consuming media content, providing (530) information related to the change in the least one content consumption characteristic to other users in the identified group, detecting (540) a change in at least one content consumption characteristic by a second user in the group of users, the change based on the information related to the change by the first user, and providing (550) information related to the change by the second user to the other users in the identified group.

### Content of the Invention

The present invention is defined by a method (implemented by a server) according to claim 1, a method (implemented by a client) according to claim 4, a server according to claim 7, a client according to claim 10 and a computer storage medium claim 13. Further embodiments are set forth in the dependent claims 2-3, 5, 6, 8, 9, 11 and 12.

According to the present disclosure, the server receives the user information change data, and determines the information change content; inquires at least one pre-stored group according to the information change content, determines that the group corresponding to the information change content exists, and obtains information about the target object of the group; and sends the information change content to the target object. Thus, related contacts may be automatically informed of changed user information without being informed one by one, thereby saving both time and labor and greatly improving the user experience.

### Brief Description of Drawings

FIG. 1 is a flowchart of an information sharing method according to an embodiment one of the present invention.
FIG. 2 is a flowchart of an information sharing method according to an embodiment two of the present invention.
FIG. 3 is a flowchart of an information sharing method according to an embodiment three of the present invention.
FIG. 4 is a flowchart of an information sharing method according to an embodiment four of the present invention.
FIG. 5 is a schematic diagram of a composition structure of a server according to an embodiment of the present invention.
FIG. 6 is a schematic diagram of a composition structure of a client according to an embodiment of the present invention.
FIG. 7 is a schematic diagram of a composition structure of an information sharing system according to an embodiment of the present invention.

### Preferred Embodiments of the Present Invention

The present invention will be further elaborated below in conjunction with accompanying drawings and specific embodiments.

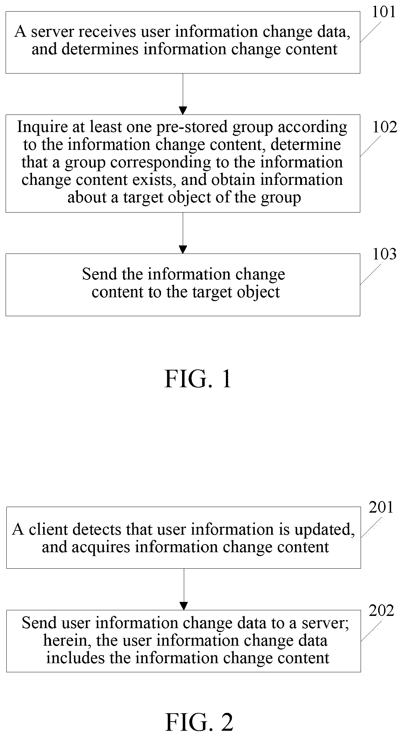

An embodiment of the present invention provides an information sharing method. The information sharing method is applied to a server. FIG. 1 is a flowchart of an information sharing method according to an embodiment one of the present invention. As shown in FIG. 1, the method includes the following steps.

Step 101: The server receives user information change data and determines information change content.

Here, before the server receives the user information change data, the method further includes: receiving information data synchronized by a client; herein the information data includes at least one piece of group data, and each piece of group data includes a mapping relation between user information categories corresponding to a group and target objects, and a key corresponding to each target object.

Specifically, the group data includes a mapping relation between user information categories corresponding to a group and target objects, the user information categories are, for example, a phone number, a conference and a schedule, namely a phone number update followed group, a conference reminder update followed group, and a schedule reminder update followed group, etc.

Herein, the key corresponding to the target object is generated by the target object and sent to the client when the client sends a confirmation to the target object, and is sent to the server when the client synchronizes information data.

Step 102: At least one pre-stored group is inquired according to the information change content, it is determined that a group corresponding to the information change content exists, and information about a target object of the group is obtained.

Here, the step that the pre-stored group is inquired according to the information change content and it is determined that the group corresponding to the information change content exists includes that: a corresponding user information category is determined according to the information change content, at least one piece of group data is inquired according to the user information category, and a group corresponding to the user information category is determined.

Specifically, the at least one group includes: a phone number group, a conference group, a schedule group and other groups, namely the phone number update followed group, the conference reminder update followed group and the schedule reminder update followed group, etc. When the information change content is a phone number, the user information category corresponding to the information change content is identified, such as, the phone number, then group names of the abovementioned three stored groups are searched for obtaining the group name matched with the phone number, namely the phone number update followed group. Further, information about all target objects in the phone number update followed group is acquired, and the information about the target objects is contact information of the target objects, such as phone numbers and e-mail addresses, etc.

According to a further alternative embodiment of the present invention, when it is determined that there is no group corresponding to the information change content, the method further includes the following steps.

Prompt information is sent to the client, the prompt information is used for representing that there is no group corresponding to the information change content;
A response message sent by the client is received, and any operation is not executed according to the response message. Or, it is re-determined whether the group corresponding to the information change content exists according to information data carried in the response message.

Specifically, when it is determined that there is no group corresponding to the information change content, the server sends prompt information to the client, the prompt information is used for prompting a user that there is no the group corresponding to the information change content. The server inquires whether to create the group corresponding to the information change content, creates the group corresponding to the information change content according to a user operation, and further executes the above-mentioned synchronization of the information data. Or, the server does not create the group corresponding to the information change content, so as to abandon information sharing.

Step 103: The information change content is sent to the target object.

Here, the step that the information change content is sent to the target object includes that: the information change content encrypted by using the key corresponding to the target object is sent to the target object.

Specifically, the server encrypts the information change content by using the key corresponding to the target object, and sends the encrypted information change content to the target object, and the target object self-decrypts to obtain the information change content, so as to avoid leakage of personal information caused by wrong sending of the information change content to a wrong target object.

In the present embodiment, different sharing rights are granted to different groups. That is, as for the phone number update followed group, when the phone number of the user changes, the changing phone number is sent to the target object in the corresponding group; as for the conference reminder update followed group, when the user changes a conference schedule, the changed conference progress is sent to the target object in the corresponding group; and as for the schedule reminder update followed group, when the user changes a schedule, the changed schedule progress is sent to the target object in the corresponding group. Thus, related contacts may be automatically informed of changed user information without being informed one by one, thereby saving both time and labor, and greatly improving the user experience.

The embodiment of the present invention also provides a computer storage medium, in which computer-executable instructions are stored. The computer-executable instructions are used for executing the information sharing method applied to the server according to the embodiment of the present invention.

An embodiment of the present invention provides an information sharing method. The information sharing method is applied to a client. FIG. 2 is a flowchart of an information sharing method according to an embodiment two of the present invention. As shown in FIG. 2, the method includes the following steps.

Step 201: The client detects that user information is updated, and acquires information change content.

Here, before the client detects that the user information is updated, the method further includes the following steps.

The client sends, according to at least one pre-stored group, a request message corresponding to the group to a target object in the at least one group, herein the request message is used for obtaining confirmation of the target object.

A confirmation message sent by the target object is received, the confirmation message includes a key corresponding to the target object.

Specifically, after the client sends a request message to the target object, the target object confirms the request message and generates a key, the key contained in a confirmation message is returned to the client, and the target object stores the key, in order to decrypt the encrypted information change content when shared information is received, so as to avoid leakage of personal information caused by sending of the information change content to a wrong target object; herein the keys generated by the target objects in various groups may be identical or may be different from each other.

Here, before the client detects that the user information is updated, the method further includes that: the client synchronizes information data to the server; herein the information data includes at least one piece of group data, and each piece of group data includes a mapping relation between user information categories corresponding to a group and target objects, and a key corresponding to each target object.

Herein, the key is arranged to encrypt the information change content when the server sends the information change content to the target object, so as to avoid leakage of personal information caused by wrong sending of the information change content to a wrong target object.

Step 202: User information change data is sent to a server; herein the user information change data includes the information change content.

In the present embodiment, the server determines that a group corresponding to the information change content exists, and when the server determines that there is no group corresponding to the information change content, the method further includes the following steps.

The client receives prompt information; the prompt information is used for representing that there is no group corresponding to the information change content in the server.

The group corresponding to the information change content is created according to a user operation, and a response message is sent to the server, the response message includes group data corresponding to the information change content. Or, a response message is sent to the server, the response message is used for indicating not executing any operation.

Specifically, the client creates the group corresponding to the information change content according to the prompt information, and further synchronizes the group information data to the server; or, the client does not creates the group corresponding to the information change content according to the prompt information, so as to abandon information sharing.

In the present embodiment, different sharing rights are granted to different groups. That is, as for the phone number update followed group, when the phone number of the user changes, the changed phone number is sent to the target object in the corresponding group. As for the conference reminder update followed group, when the user changes a conference schedule, the changed conference progress is sent to the target object in the corresponding group. As for the schedule reminder update followed group, when the user changes a schedule, the changed schedule progress is sent to the target object in the corresponding group. Thus, related contacts may be automatically informed of changed user information without being informed one by one, thereby saving both time and labor, and greatly improving the user experience.

The embodiment of the present invention also provides a computer storage medium, in which computer-executable instructions are stored. The computer-executable instructions are used for executing the information sharing method applied to the client according to the embodiment of the present invention.

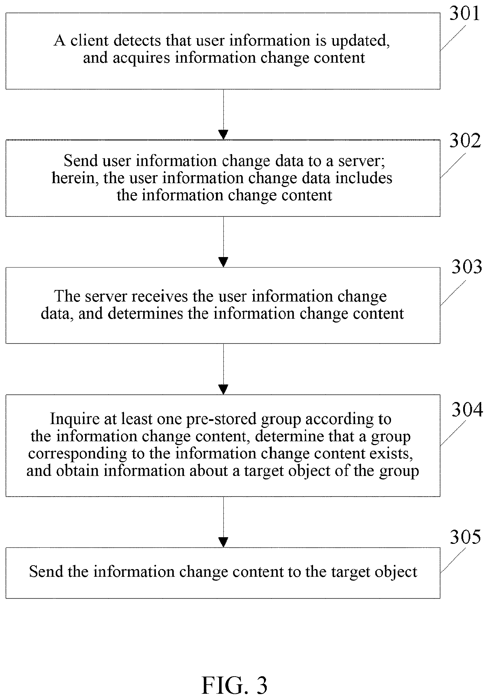

An embodiment of the present invention provides an information sharing method. FIG. 3 is a flowchart of an information sharing method according to an embodiment three of the present invention. As shown in FIG. 3, the method includes the following steps.

Step 301: A client detects that user information is updated, and acquires information change content.

Here, before the client detects that the user information is updated, the method further includes the following steps: the client sends, according to at least one pre-stored group, a request message corresponding to the group to a target object in the at least one group, herein the request message is used for obtaining confirmation of the target object; receives a confirmation message sent by the target object, the confirmation message includes a key corresponding to the target object.

Specifically, after the client sends a request message to the target object, the target object confirms the request message and generates a key, the key contained in a confirmation message is returned to the client, and the target object stores the key, in order to decrypt the encrypted information change content when shared information is received, so as to avoid leakage of personal information caused by sending of the information change content to a wrong target object; herein the keys generated by the target objects in various groups may be identical or may be different from each other.

Here, before the client detects that the user information is updated, the method further includes that: the client synchronizes information data to a server; herein the information data includes at least one piece of group data, and each piece of group data includes a mapping relation between user information categories corresponding to a group and target objects, and a key corresponding to each target object.

Herein, the key is arranged to encrypt the information change content when the server sends the information change content to the target object, so as to avoid leakage of personal information caused by wrong sending of the information change content to a wrong target object.

Step 302: User information change data is sent to a server; herein the user information change data includes the information change content.

Step 303: The server receives the user information change data, and determines the information change content.

Here, before the server receives the user information change data, the method further includes: receiving information data synchronized by the client; herein the information data includes at least one piece of group data, and each piece of group data includes a mapping relation between user information categories corresponding to a group and target objects, and a key corresponding to each target object.

Specifically, the group data includes a mapping relation between user information categories corresponding to a group and target objects, the user information categories are, for example, a phone number, a conference and a schedule, etc. namely a phone number update followed group, a conference reminder update followed group, and a schedule reminder update followed group.

Herein, the key corresponding to the target object is generated by the target object and sent to the client when the client sends a confirmation to the target object, and is sent to the server when the client synchronizes information data.

Step 304: At least one pre-stored group is inquired according to the information change content, it is determined that a group corresponding to the information change content exists, and information about a target object of the group is obtained.

Here, the step that the pre-stored group is inquired according to the information change content and it is determined that the group corresponding to the information change content exists includes that:
a corresponding user information category is determined according to the information change content, at least one piece of group data is inquired according to the user information category, and a group corresponding to the user information category is determined.

Specifically, the at least one group includes: a phone number group, a conference group, a schedule group and other groups, etc., namely the phone number update followed group, the conference reminder update followed group and the schedule reminder update followed group. When the information change content is a phone number, the user information category corresponding to the information change content is identified, such as, the phone number, then group names of the abovementioned three stored groups are searched for obtaining the group name matched with the phone number, namely the phone number update followed group. Further, information about all target objects in the phone number update followed group is acquired, the information about the target objects is contact information of the target objects, such as phone numbers and e-mail addresses, etc.

Step 305: The information change content is sent to the target object.

Here, the step that the information change content is sent to the target object includes that:
the information change content encrypted by using the key corresponding to the target object is sent to the target object.

Specifically, the server encrypts the information change content by using the key corresponding to the target object, and sends the encrypted information change content to the target object, and the target object self-decrypts to obtain the information change content, so as to avoid leakage of personal information caused by wrong sending of the information change content to a wrong target object.

According to a further alternative embodiment of the present invention, when it is determined that there is no group corresponding to the information change content, the method further includes the following steps.

Prompt information is sent to the client; the prompt information is used for representing that there is no group corresponding to the information change content.

A response message sent by the client is received, and any operation is not executed according to the response message. Or, it is re-determined whether the group corresponding to the information change content exists according to information data carried in the response message.

Specifically, when it is determined that there is no group corresponding to the information change content, the server sends prompt information to the client, the prompt information is used for prompting a user that there is no the group corresponding to the information change content, and the server inquires whether to create the group corresponding to the information change content, creates the group corresponding to the information change content according to a user operation, and further executes the above-mentioned synchronization of the information data; or the server does not create the group corresponding to the information change content, so as to abandon information sharing.

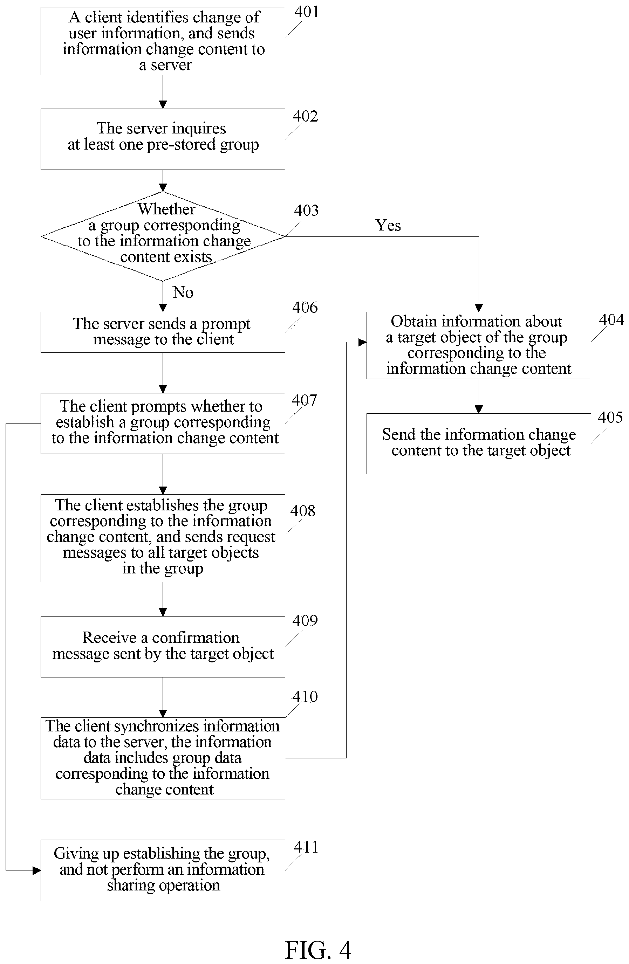

An example of the present disclosure provides an information sharing method. FIG. 4 is a flowchart of an information sharing method according to an embodiment four of the present invention. As shown in FIG. 4, the method includes the following steps..

Step 401: A client identifies change of user information, and sends information change content to a server.

In the present embodiment, adoption of the information change content as a phone number of a user is taken as an example. That is, change of the phone number is identified, and the changed phone number is sent to the server.

Step 402: The server inquires at least one pre-stored group.

Specifically, the at least one group includes: a phone number group, a conference group, a schedule group and other groups, etc., namely a phone number update followed group, a conference reminder update followed group and a schedule reminder update followed group. When the information change content is a phone number, the user information category corresponding to the information change content is identified, such as, the phone number, then group names of the abovementioned three stored groups are searched for obtaining the group name matched with the phone number, namely the phone number update followed group.

Step 403: It is judged whether a group corresponding to the information change content exists, when a judgment result is yes, Step 404 is executed, and when a judgment result is no, Step 406 is executed.

Step 404: Information about a target object of the group corresponding to the information change content is obtained, and Step 405 is executed.

Here, a group corresponding to the phone number category is determined, and information about all target objects in the group is acquired, the information about the target objects is contact information of the target objects, such as phone numbers and e-mail addresses, etc.

Step 405: The information change content is sent to the target object.

In the present embodiment, the server sends the changed phone number to the target object.

Step 406: The server sends a prompt message to the client; the prompt message is used for representing that there is no group corresponding to the information change content.

Here, when the server determines that there is no group corresponding to the information change content, the prompt information is sent to the client.

Step 407: The client prompts whether to establish the group corresponding to the information change content, when the group corresponding to the information change content is established, Step 408 is executed; when the group corresponding to the information change content is not established, Step 411 of giving up establishing the group and not performing an information sharing operation are executed.

Step 408: The client establishes the group corresponding to the information change content, and sends request messages to all target objects in the group; herein the request messages are used for obtaining confirmation of the target objects.

Here, the client may establish the group corresponding to the information change content according to a user operation, i.e., the phone number update followed group. The client sends confirmation messages to all target objects in the phone number update followed group so as to be confirmed by the target object.

Step 409: A confirmation message sent by the target object is received, so as to complete confirmation of the target object.

Here, the target object gives a confirmation according to the request message sent by the client and generates a key, the key contained in a confirmation message is returned to the client, and the target object stores the key, in order that the encrypted information change content is decrypted when shared information is received, so as to avoid leakage of personal information caused by wrong sending of the information change content to a wrong target object; herein the keys generated by the target objects in all groups may be identical or may be different from each other.

Step 410: The client synchronizes information data to the server, the information data includes group data corresponding to the information change content. Step 404 and Step 405 are further executed.

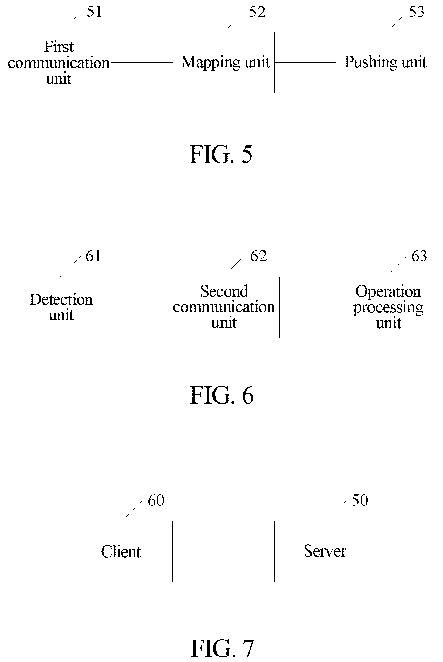

An embodiment of the present invention also provides a server. FIG. 5 is a schematic diagram of a composition structure of a server according to an embodiment of the present invention. As shown in FIG. 5, the server includes: a first communication unit 51, a mapping unit 52 and a pushing unit 53.

The first communication unit 51 is arranged to receive user information change data and send the user information change data to the mapping unit 52;

The mapping unit 52 is arranged to determine information change content according to the user information change data sent by the first communication unit 51, inquire at least one pre-stored group according to the information change content, determine that a group corresponding to the information change content exists, and obtain information about a target object of the group.

The pushing unit 53 is arranged to send the determined information change content to the target object obtained by the mapping unit 52.

Herein, the mapping unit 52 is arranged to determine a corresponding user information category according to the information change content, inquire at least one piece of group data according to the user information category, and determine a group corresponding to the user information category.

According to a further alternative embodiment of the present invention, the first communication unit 51 is further arranged to receive information data synchronized by a client before receiving the user information change data; herein the information data includes at least one piece of group data, and each piece of group data includes a mapping relation between user information categories corresponding to a group and target objects, and a key corresponding to each target object.

The mapping unit 52 is further arranged to store the information data received by the first communication unit 51.

According to a further alternative embodiment of the present invention, the pushing unit 53 is arranged to send information change content encrypted by using a key corresponding to the target object to the target object obtained by the mapping unit 52.

According to a further alternative embodiment of the present invention, the first communication unit 51 is further arranged to: send prompt information to the client when the mapping unit 52 determines that there is no group corresponding to the information change content, the prompt information is used for representing that there is no group corresponding to the information change content; and receive a response message sent by the client.

The mapping unit 52 is further arranged to not execute any operation according to the response message received by the first communication unit 51; or, re-determine whether the group corresponding to the information change content exists according to information data carried in the response message received by the first communication unit 51.

Those skilled in the art shall understand that functions of each processing unit in the server of the embodiment of the present invention may be interpreted with reference to related descriptions for the above-mentioned information sharing method. Each processing unit in the server of the embodiment of the present invention may be implemented by means of an analog circuit for achieving the functions in the embodiment of the present invention, or may be implemented by running of software for executing the functions in the embodiment of the present invention on a smart terminal.

Herein, in practical application, the mapping unit 52 in the server may be implemented by a Central Processing Unit (CPU), a Digital Signal Processor (DSP) or a Field-Programmable Gate Array (FPGA) in the server. In practical application, the first communication unit 51 and the pushing unit 53 in the server may be implemented by a transceiver or a transceiver antenna in the server.

An embodiment of the present invention also provides a client. FIG. 6 is a schematic diagram of a composition structure of a client according to an embodiment of the present invention. As shown in FIG. 6, the client includes: a detection unit 61 and a second communication unit 62.

The detection unit 61 is arranged to detect that user information is updated, and acquire information change content.

The second communication unit 62 is arranged to send user information change data to a server, herein the user information change data includes the information change content acquired by the detection unit 61.

According to a further alternative embodiment of the present invention, the second communication unit 62 is further arranged to: send a request message corresponding to the group to a target object in the at least one group according to at least one pre-stored group, herein the request message is used for obtaining confirmation of the target object; and is further configured to receive a confirmation message sent by the target object, the confirmation message includes a key corresponding to the target object.

According to a further alternative embodiment of the present invention, the second communication unit 62 is further arranged to synchronize information data to the server before detecting that the user information is updated; herein the information data includes at least one piece of group data, and each piece of group data includes a mapping relation between user information categories corresponding to a group and target objects, and a key corresponding to each target object.

According to a further alternative embodiment of the present invention, the client further includes an operation processing unit 63.

The second communication unit 62 is further arranged to: receive prompt information, the prompt information is used for representing that there is no group corresponding to the information change content in the server; and is further arranged to send a response message to the server.

The operation processing unit 63 is arranged to: create a group corresponding to the information change content according to a user operation, and trigger the second communication unit 62 to send the response message to the server; the response message includes group data corresponding to the information change content; or, is arranged to trigger the second communication unit 62 to send the response message to the server, the response message is used for indicating not executing any operation.

Those skilled in the art shall understand that functions of each processing unit in the client of the embodiment of the present invention may be interpreted with reference to related descriptions for the above-mentioned information sharing method. Each processing unit in the client of the embodiment of the present invention may be implemented by means of an analog circuit for achieving the functions in the embodiment of the present invention, or may be implemented by running of software for executing the functions in the embodiment of the present invention on a smart terminal.

Herein, in practical application, the detection unit 61 and the operation processing unit 63 in the client may be implemented by a CPU, a DSP or an FPGA in the client respectively. In practical application, the second communication unit 62 in the client may be implemented by a transceiver or a transceiver antenna in the client.

An embodiment of the present invention also provides an information sharing system. FIG. 7 is a schematic diagram of a composition structure of an information sharing system according to an embodiment of the present invention. As shown in FIG. 7, the system includes: a client 60 and a server 50.

The client 60 is arranged to detect that user information is updated, acquire information change content, and send user information change data to the server 50; herein the user information change data includes the information change content;

The server 50 is arranged to receive the user information change data, determine the information change content, inquire at least one pre-stored group according to the information change content, determine that a group corresponding to the information change content exists, obtain information about a target object of the group, and send the information change content to the target object.

According to a further alternative embodiment of the present invention, the client 60 is further arranged to synchronize information data to the server before detecting that the user information is updated; herein the information data includes at least one piece of group data, and each piece of group data includes a mapping relation between user information categories corresponding to a group and target objects, and a key corresponding to each target object.

The server 50 is further arranged to receive the information data synchronized by the client 60; herein the information data includes at least one piece of group data, and each piece of group data includes a mapping relation between user information categories corresponding to a group and target objects, and a key corresponding to each target object.

According to a further alternative embodiment of the present invention, the client 60 is further arranged to: send a request message corresponding to the group to the target object in the at least one group according to the at least one pre-stored group before detecting that the user information is updated, herein the request message is used for obtaining confirmation of the target object; and receive a confirmation message sent by the target object, herein the confirmation message includes a key corresponding to the target object.

According to a further alternative embodiment of the present invention, the server 50 is further arranged to: send prompt information to the client 60 when determining that there is no group corresponding to the information change content, herein the prompt information is used for representing that there is no group corresponding to the information change content; and, is also arranged to receive a response message sent by the client, and not execute any operation according to the response message; or, re-determine whether a group corresponding to the information change content exists according to information data carried in the response message.

The client 60 is further arranged to: receive the prompt information sent by the server 50, the prompt information is used for representing that there is no group corresponding to the information change content in the server 50; create the group corresponding to the information change content according to a user operation, and send the response message to the server 50, herein the response message includes group data corresponding to the information change content; or, send the response message to the server 50, herein the response message is used for indicating not executing any operation.

Specifically, the server 50 is arranged to send information change content encrypted by using the key corresponding to the target object to the target object.

Specifically, the server 50 is further arranged to determine a corresponding user information category according to the information change content, inquire at least one piece of group data according to the user information category, and determine a group corresponding to the user information category.

Those skilled in the art shall understand that the embodiments of the present invention may be provided as a method, a system or a computer program product. Thus, forms of hardware embodiments, software embodiments or embodiments integrating software and hardware may be adopted in the present invention. Moreover, a form of the computer program product implemented on one or more computer available storage media (including, but are not limited to, a disk memory, an optical memory and the like) containing computer available program codes may be adopted in the present invention.

The present invention is described with reference to flow charts and/or block diagrams of the method, the device (system) and the computer program product according to the embodiments of the present invention. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

The aforementioned embodiments are meant to be examples useful for understanding the invention. The present invention is only defined by the appended independent claims, and advantageous embodiments of the present invention are described in the dependent claims.

### Industrial Applicability

According to the present disclosure, a server receives user information change data, and determines the information change content; inquires at least one pre-stored group according to the information change content, determines that a group corresponding to the information change content exists, and obtains information about a target object of the group; and sends the information change content to the target object. Thus, related contacts may be automatically informed of changed user information without being informed one by one, thereby saving both time and labor and greatly improving the user experience.

## Claims

1. An information sharing method, implemented by a server (50), comprising:
receiving information data synchronized by a client (60), wherein the information data comprises at least one piece of group data, and each piece of group data comprises a mapping relation between user information categories corresponding to a group and target objects in the group, and a key corresponding to each target object, wherein the key corresponding to the target object is generated by the target object and sent to the client by the target object, when the client sends a request message to the target object for obtaining a confirmation of the target object, and is sent to the server by the client, when the client synchronizes the information data;
receiving user information change data, and determining an information change content (101);
inquiring at least one pre-stored group according to the information change content, determining that a group corresponding to the information change content exists, and obtaining information about a target object of the group (102); and
sending the information change content to the target object of the group (103),
wherein, sending the information change content to the target object of the group comprises: encrypting the information change content by using the key corresponding to the target object of the group; and sending the encrypted information change content to the target object to the target object of the group.

2. The method according to claim 1, wherein, inquiring the pre-stored group according to the information change content and determining that the group corresponding to the information change content exists comprise: determining a corresponding user information category according to the information change content, inquiring at least one piece of group data according to the user information category, and determining a group corresponding to the user information category.

3. The method according to claim 1, wherein, when it is determined that there is no group corresponding to the information change content, the method further comprises:
sending prompt information to the client, wherein the prompt information is used for representing that there is no group corresponding to the information change content; and
receiving a response message sent by the client, and not executing any operation according to the response message; or, re-determining whether a group corresponding to the information change content exists according to information data carried in the response message.

4. An information sharing method, implemented by a client (60), comprising:
synchronizing information data to a server (50), wherein the information data comprises at least one piece of group data, and each piece of group data comprises a mapping relation between user information categories corresponding to a group and target objects in the group, and a key corresponding to each target object, wherein the key corresponding to the target object is generated by the target object and sent to the client by the target object, when the client sends a request message to the target object for obtaining a confirmation of the target object, and is sent to the server by the client, when the client synchronizes the information data;
detecting that user information is updated, and acquiring an information change content (201); and
sending user information change data to the server, wherein the user information change data comprises the information change content (202), and wherein the information change content is sent by the server, to a corresponding target object, encrypted by using a key corresponding to the target object.

5. The method according to claim 4, the method further comprising:
receiving prompt information; wherein the prompt information is used for representing that there is no group corresponding to the information change content in the server; and
creating a group corresponding to the information change content according to a user operation, and sending a response message to the server, wherein the response message comprises group data corresponding to the information change content; or, sending a response message to the server, wherein the response message is used for indicating not executing any operation.

6. The method according to claim 4, the method further comprising the following steps implemented by the server:
receiving the user information change data, determining the information change content (303); inquiring at least one pre-stored group according to the information change content, determining that a group corresponding to the information change content exists, obtaining information about a target object of the group (304); and sending the information change content to the target object (305).

7. A server (50) comprising: a first communication unit (51), a mapping unit (52) and a pushing unit (53); wherein,
the first communication unit (51) is arranged to receive information data synchronized by a client (60), the information data comprises at least one piece of group data, and each piece of group data comprises a mapping relation between user information categories corresponding to a group and target objects in the group, and a key corresponding to each target object, wherein the key corresponding to the target object is generated by the target object and sent to the client by the target object, when the client sends a request message to the target object for obtaining a confirmation of the target object, and is sent to the first communication unit by the client, when the client synchronizes the information data;
the first communication unit (51) is further arranged to receive user information change data, and send the user information change data to the mapping unit;
the mapping unit (52) is arranged to store the information data received by the first communication unit, determine an information change content according to the user information change data sent by the first communication unit, inquire at least one pre-stored group according to the information change content, determine that a group corresponding to the information change content exists, and obtain information about a target object of the group; and
the pushing unit (53) is arranged to send the information change content to the target object obtained by the mapping unit, wherein, the pushing unit is arranged to send the information change content encrypted by using the key corresponding to the target object to the target object obtained by the mapping unit.

8. The server according to claim 7, wherein, the mapping unit is arranged to determine a corresponding user information category according to the information change content, inquire at least one piece of group data according to the user information category, and determine a group corresponding to the user information category.

9. The server according to claim 7, wherein, the first communication unit is further arranged to: send prompt information to the client when the mapping unit determines that there is no group corresponding to the information change content, wherein the prompt information is used for representing that there is no group corresponding to the information change content; and receive a response message sent by the client; and
the mapping unit is further arranged to not execute any operation according to the response message received by the first communication unit; or, re-determine whether a group corresponding to the information change content exists according to information data carried in the response message received by the first communication unit.

10. A client (60) comprising: a detection unit (61) and a second communication unit (62), wherein,
the second communication unit (62) is arranged to synchronize information data to a server (50), wherein the information data comprises at least one piece of group data, and each piece of group data comprises a mapping relation between user information categories corresponding to a group and target objects in the group, and a key corresponding to each target object, wherein the key corresponding to the target object is generated by the target object and sent to the client by the target object, when the client sends a request message to the target object for obtaining a confirmation of the target object, and is sent to the server by the client, when the client synchronizes the information data;
the detection unit (61) is arranged to detect that user information is updated, and acquire an information change content; and
the second communication unit is further arranged to send user information change data to the server, wherein the user information change data comprises the information change content acquired by the detection unit, and wherein the information change content is sent by the server, to a corresponding target object, encrypted by using a key corresponding to the target object.

11. The client according to claim 10, further comprising an operation processing unit (63); wherein,
the second communication unit is further arranged to: receive prompt information, wherein the prompt information is used for representing that there is no group corresponding to the information change content in the server; and, is further arranged to send a response message to the server; and
the operation processing unit is arranged to: create a group corresponding to the information change content according to a user operation, and trigger the second communication unit to send the response message to the server, wherein the response message comprises group data corresponding to the information change content; or, is arranged to trigger the second communication unit to send the response message to the server, wherein the response message is used for indicating not executing any operation.

12. An information sharing system, wherein the system comprises: the client (60) according to claim 10 and the server (50) according to claim 7.

13. A computer storage medium, storing computer-executable instructions, wherein the computer-executable instructions are used for executing the information sharing method according to any one of claims 1-3, when run on a server.

## Patentansprüche

1. Verfahren zur gemeinsamen Informationsnutzung, das von einem Server (50) implementiert wird, umfassend:
Empfangen von Informationsdaten, die von einem Client (60) synchronisiert werden, worin die Informationsdaten zumindest ein Stück von Gruppendaten umfassen, und jedes Stück von Gruppendaten eine Zuordnungsbeziehung zwischen Benutzerinformationskategorien, die einer Gruppe und Zielobjekten in der Gruppe entsprechen, und einem Schlüssel, der jedem Zielobjekt entspricht, umfasst, worin der Schlüssel, der dem Zielobjekt entspricht, von dem Zielobjekt erzeugt wird und an den Client von dem Zielobjekt gesandt wird, worin der Client eine Anforderungsnachricht an den Zielobjekt sendet, um eine Bestätigung des Zielobjekts zu erhalten, und an den Server von dem Client dann gesandt wird, wenn der Client die Informationsdaten synchronisiert;
Empfangen von Benutzerinformationsänderungsdaten, und Bestimmen eines Informationsänderungsinhalts (101);
Anfragen zumindest einer vorgespeicherten Gruppe gemäß dem Informationsänderungsinhalt, Bestimmen, dass eine Gruppe, die dem Informationsänderungsinhalt entspricht, existiert, und Erhalten von Informationen über einen Zielobjekt der Gruppe (102); und
Senden des Informationsänderungsinhalts an den Zielobjekt der Gruppe (103),
worin das Senden des Informationsänderungsinhalts an den Zielobjekt der Gruppe umfasst: das Verschlüsseln des Informationsänderungsinhalts durch Verwendung des Schlüssels, der dem Zielobjekt der Gruppe entspricht; und Senden des verschlüsselten Informationsänderungsinhalts an den Zielobjekt der Gruppe.

2. Verfahren nach Anspruch 1, worin das Anfragen der vorgespeicherten Gruppe gemäß dem Informationsänderungsinhalt und das Bestimmen, dass die Gruppe, die dem Informationsänderungsinhalt entspricht, existiert, umfassen: Bestimmen einer entsprechenden Benutzerinformationskategorie gemäß dem Informationsänderungsinhalt, Anfragen zumindest eines Stücks von Gruppendaten gemäß der Benutzerinformationskategorie, und Bestimmen einer Gruppe, die der Benutzerinformationskategorie entspricht.

3. Verfahren nach Anspruch 1, worin, wenn es bestimmt wird, dass es keine Gruppe gibt, die dem Informationsänderungsinhalt entspricht, das Verfahren ferner umfasst:
Senden von Eingabeaufforderungsinformationen an den Client, worin die Eingabeaufforderungsinformationen verwendet werden, um anzugeben, dass es keine Gruppe gibt, die dem Informationsänderungsinhalt entspricht; und
Empfangen einer Antwortnachricht, die vom Client gesandt wird, und Nicht-Durchführen von jeglichen Operationen gemäß der Antwortnachricht; oder Neu-Bestimmen, ob eine Gruppe, die dem Informationsänderungsinhalt entspricht, existiert, gemäß Informationsdaten, die in der Antwortnachricht getragen werden.

4. Verfahren zur gemeinsamen Informationsnutzung, das von einem Client (60) implementiert wird, umfassend:
Synchronisieren von Informationsdaten an einen Server (50), worin die Informationsdaten zumindest ein Stück von Gruppendaten umfassen, und jedes Stück von Gruppendaten eine Zuordnungsbeziehung zwischen Benutzerinformationskategorien, die einer Gruppe und Zielobjekten in der Gruppe entsprechen, und einem Schlüssel, der jedem Zielobjekt entspricht, umfasst, worin der Schlüssel, der dem Zielobjekt entspricht, von dem Zielobjekt erzeugt wird und an den Client von dem Zielobjekt gesandt wird, worin der Client eine Anforderungsnachricht an den Zielobjekt sendet, um eine Bestätigung des Zielobjekts zu erhalten, und an den Server von dem Client dann gesandt wird, wenn der Client die Informationsdaten synchronisiert;
Feststellen, dass die Benutzerinformationen aktualisiert sind, und Erfassen eines Informationsänderungsinhalts (201); und
Senden von Benutzerinformationsänderungsdaten an den Server, worin die Benutzerinformationsänderungsdaten den Informationsänderungsinhalt umfassen (202), und worin der Informationsänderungsinhalt von dem Server an einen entsprechenden Zielobjekt gesandt wird, der durch Verwendung eines Schlüssels, der dem Zielobjekt entspricht, verschlüsselt ist.

5. Verfahren nach Anspruch 4, worin das Verfahren ferner umfasst:
Empfangen von Eingabeaufforderungsinformationen; worin die Eingabeaufforderungsinformationen verwendet werden, um anzugeben, dass es keine Gruppe gibt, die dem Informationsänderungsinhalt im Server entspricht; und
Erzeugen einer Gruppe, die dem Informationsänderungsinhalt entspricht, gemäß einer Benutzeroperation, und Senden einer Antwortnachricht an den Server, worin die Antwortnachricht Gruppendaten umfasst, die dem Informationsänderungsinhalt entsprechen; oder Senden einer Antwortnachricht an den Server, worin die Antwortnachricht verwendet wird, um anzugeben, dass keine Operation durchgeführt wird.

6. Verfahren nach Anspruch 4, wobei das Verfahren ferner die folgenden Schritte umfasst, die vom Server implementiert werden:
Empfangen der Benutzerinformationsänderungsdaten, Bestimmen des Informationsänderungsinhalts (303); Anfragen zumindest einer vorgespeicherten Gruppe gemäß dem Informationsänderungsinhalt, Bestimmen, dass eine Gruppe, die dem Informationsänderungsinhalt entspricht, existiert, Erhalten von Informationen über einen Zielobjekt der Gruppe (304); und Senden des Informationsänderungsinhalts an den Zielobjekt (305).

7. Server (50), umfassend: eine erste Kommunikationseinheit (51), eine Zuordnungseinheit (52) und eine Schubeinheit (53); worin die erste Kommunikationseinheit (51) angeordnet ist, um Informationsdaten zu empfangen, die von einem Client (60) synchronisiert werden, die Informationsdaten zumindest ein Stück von Gruppendaten umfassen, und jedes Stück von Gruppendaten eine Zuordnungsbeziehung zwischen Benutzerinformationskategorien, die einer Gruppe und Zielobjekten in der Gruppe entsprechen, und einem Schlüssel, der jedem Zielobjekt entspricht, umfasst, worin der Schlüssel, der dem Zielobjekt entspricht, von dem Zielobjekt erzeugt wird und an den Client von dem Zielobjekt gesandt wird, wenn der Client eine Anforderungsnachricht an den Zielobjekt sendet, um eine Bestätigung des Zielobjekts zu erhalten, und an die erste Kommunikationseinheit von dem Client dann gesandt wird, wenn der Client die Informationsdaten synchronisiert;
die erste Kommunikationseinheit (51) ferner angeordnet ist, um Benutzerinformationsänderungsdaten zu empfangen, und die Benutzerinformationsänderungsdaten an die Zuordnungseinheit zu senden;
die Zuordnungseinheit (52) angeordnet ist, um die Informationsdaten, die von der ersten Kommunikationseinheit empfangen werden, zu speichern, einen Informationsänderungsinhalt gemäß den Benutzerinformationsänderungsdaten, die von der ersten Kommunikationseinheit gesandt werden, zu bestimmen, zumindest eine vorgespeicherte Gruppe gemäß dem Informationsänderungsinhalt anzufragen, zu bestimmen, dass eine Gruppe, die dem Informationsänderungsinhalt entspricht, existiert, und Informationen über einen Zielobjekt der Gruppe zu erhalten; und
die Schubeinheit (53) angeordnet ist, um den Informationsänderungsinhalt an den Zielobjekt, der von der Zuordnungseinheit erhalten wird, zu senden, worin die Schubeinheit angeordnet ist, um den durch Verwendung des Schlüssels, der dem Zielobjekt entspricht, verschlüsselten Informationsänderungsinhalt an den Zielobjekt, der von der Zuordnungseinheit erhalten wird, zu senden.

8. Server nach Anspruch 7, worin die Zuordnungseinheit angeordnet ist, um eine entsprechende Benutzerinformationskategorie gemäß dem Informationsänderungsinhalt zu bestimmen, zumindest ein Stück von Gruppendaten gemäß der Benutzerinformationskategorie anzufragen, und eine Gruppe, die der Benutzerinformationskategorie entspricht, zu bestimmen.

9. Server nach Anspruch 7, worin die erste Kommunikationseinheit ferner angeordnet ist, um: Eingabeaufforderungsinformationen an den Client dann zu senden, wenn die Zuordnungseinheit bestimmt, dass es keine Gruppe gibt, die dem Informationsänderungsinhalt entspricht, worin die Eingabeaufforderungsinformationen verwendet werden, um anzugeben, dass es keine Gruppe gibt, die dem Informationsänderungsinhalt entspricht; und eine Antwortnachricht, die vom Client gesandt wird, zu empfangen; und
und die Zuordnungseinheit ferner angeordnet ist, um jegliche Operationen gemäß der Antwortnachricht, die von der ersten Kommunikationseinheit empfangen wird, nicht durchzuführen; oder gemäß Informationsdaten, die in der Antwortnachricht, die von der ersten Kommunikationseinheit empfangen wird, getragen werden, neu zu bestimmen, ob eine Gruppe existiert, die dem Informationsänderungsinhalt entspricht.

10. Client (60), umfassend: eine Feststellungseinheit (61) und eine zweite Kommunikationseinheit (62), worin die zweite Kommunikationseinheit (62) angeordnet ist, um Informationsdaten an einen Server (50) zu synchronisieren, worin die Informationsdaten zumindest ein Stück von Gruppendaten umfassen, und jedes Stück von Gruppendaten eine Zuordnungsbeziehung zwischen Benutzerinformationskategorien, die einer Gruppe und Zielobjekten in der Gruppe entsprechen, und einem Schlüssel, der jedem Zielobjekt entspricht, umfasst, worin der Schlüssel, der dem Zielobjekt entspricht, von dem Zielobjekt erzeugt wird und an den Client von dem Zielobjekt dann gesandt wird, wenn der Client eine Anforderungsnachricht an den Zielobjekt sendet, um eine Bestätigung des Zielobjekts zu erhalten, und an den Server von dem Client dann gesandt wird, wenn der Client die Informationsdaten synchronisiert;
die Feststellungseinheit (61) angeordnet wird, um festzustellen, dass die Benutzerinformationen aktualisiert sind, und einen Informationsänderungsinhalt zu erfassen; und
die zweite Kommunikationseinheit ferner angeordnet ist, um Benutzerinformationsänderungsdaten an den Server zu senden, worin die Benutzerinformationsänderungsdaten den Informationsänderungsinhalt umfassen, der von der Feststellungseinheit erfasst wurde, und worin der Informationsänderungsinhalt von dem Server an einen entsprechenden Zielobjekt gesandt wird, der durch Verwendung eines Schlüssels, der dem Zielobjekt entspricht, verschlüsselt ist.

11. Client nach Anspruch 10, ferner umfassend eine Operationsverarbeitungseinheit (63); worin die zweite Kommunikationseinheit ferner angeordnet ist, um: Eingabeaufforderungsinformationen zu empfangen, worin die Eingabeaufforderungsinformationen verwendet werden, um anzugeben, dass es keine Gruppe gibt, die dem Informationsänderungsinhalt im Server entspricht; und ferner angeordnet ist, um eine Antwortnachricht an den Server zu senden; und die Operationsverarbeitungseinheit angeordnet ist, um: eine Gruppe, die dem Informationsänderungsinhalt entspricht, gemäß einer Benutzeroperation zu erzeugen, und die zweite Kommunikationseinheit auszulösen, die Antwortnachricht an den Server zu senden, worin die Antwortnachricht Gruppendaten, die dem Informationsänderungsinhalt entsprechen, umfasst; oder angeordnet ist, um die zweite Kommunikationseinheit auszulösen, die Antwortnachricht an den Server zu senden, worin die Antwortnachricht verwendet wird, um anzugeben, dass keine Operation durchgeführt wird.

12. System zur gemeinsamen Informationsnutzung, worin das System umfasst: den Client (60) nach Anspruch 10 und den Server (50) nach Anspruch 7.

13. Computerspeichermedium, das Computer-ausführbare Anweisungen speichert, worin die Computer-ausführbaren Anweisungen verwendet werden, um das Verfahren zur gemeinsamen Informationsnutzung nach einem der Ansprüche 1-3 durchzuführen, wenn es auf einem Server laufen gelassen wird.

## Revendications

1. Méthode de partage d'informations mise en œuvre par un serveur (50), comprenant :
la réception des données d'informations synchronisées par un client (60), où les données d'informations comprennent au moins une donnée de groupe, et chaque donnée de groupe comprend une relation de mappage entre des catégories d'informations utilisateur correspondant à un groupe et des objets cibles dans le groupe, et une clé correspondant à chaque objet cible, où la clé correspondant à l'objet cible est générée par l'objet cible et envoyée au client par l'objet cible, lorsque le client envoie un message de requête à l'objet cible pour obtenir une confirmation de l'objet cible, et est envoyée au serveur par le client lorsque le client synchronise les données d'information ;
la réception des données de changement d'informations utilisateur, et la détermination d'un contenu de changement d'informations (101) ;
l'interrogation d'au moins un groupe pré-stocké selon le contenu de changement d'informations, la détermination s'il existe un groupe correspondant au contenu de changement d'informations et l'obtention des informations sur un objet cible du groupe (102) ; et
l'envoie du contenu de changement d'informations à l'objet cible du groupe (103),
où, l'envoie du contenu de changement d'informations à l'objet cible du groupe comprend : le cryptage du contenu de changement d'informations en utilisant la clé correspondant à l'objet cible du groupe ; et l'envoi du contenu de changement d'informations cryptées à l'objet cible du groupe.

2. Méthode selon la revendication 1, où l'interrogation du groupe pré-stocké selon le contenu de changement d'informations et la détermination s'il existe le groupe correspondant au contenu de changement d'informations comprennent : la détermination d'une catégorie d'informations utilisateur correspondante selon le contenu de changement d'informations, l'interrogation d'au moins une donnée de groupe selon la catégorie d'informations utilisateur et la détermination d'un groupe correspondant à la catégorie d'informations utilisateur.

3. Méthode selon la revendication 1, où, lorsqu'il est déterminé qu'il n'y a pas un groupe correspondant au contenu de changement d'informations, la méthode comprend en outre :
l'envoi d'informations d'invite au client, où les informations d'invite sont utilisées pour indiquer qu'il n'y a pas un groupe correspondant au contenu de changement d'information ; et
la réception d'un message de réponse envoyé par le client, et la non-exécution d'aucune opération selon le message de réponse ; ou, la ré-détermination s'il existe un groupe correspondant au contenu de changement d'informations selon les données d'information transportées dans le message de réponse.

4. Méthode de partage d'informations mise en œuvre par un client (60), comprenant :
la synchronisation des données d'informations avec un serveur (50), où les données d'informations comprennent au moins une donnée de groupe, et chaque donnée de groupe comprend une relation de mappage entre des catégories d'informations utilisateur correspondant à un groupe et des objets cibles dans le groupe, et une clé correspondant à chaque objet cible, où la clé correspondant à l'objet cible est générée par l'objet cible et envoyée au client par l'objet cible, lorsque le client envoie un message de requête à l'objet cible pour obtenir une confirmation de l'objet cible, et est envoyée au serveur par le client lorsque le client synchronise les données d'informations ;
la détection si les informations utilisateur sont mises à jour, et l'acquisition d'un contenu de changement d'informations (201) ; et
l'envoi de données de changement d'informations utilisateur au serveur, où les données de changement d'informations d'utilisateur comprennent le contenu de changement d'informations (202), et où le contenu de changement d'informations est envoyé par le serveur à un objet cible correspondant, crypté en utilisant une clé correspondant à l'objet cible.

5. Méthode selon la revendication 4, la méthode comprenant en outre :
la réception d'informations d'invite ; où les informations d'invite sont utilisées pour indiquer qu'il n'y a pas un groupe correspondant au contenu de changement d'informations dans le serveur ; et
la création d'un groupe correspondant au contenu de changement d'information selon une opération utilisateur et l'envoie d'un message de réponse au serveur, où le message de réponse comprend des données de groupe correspondant au contenu de changement d'informations ; ou l'envoie d'un message de réponse au serveur, où le message de réponse est utilisé pour indiquer de n'exécuter aucune opération.

6. Méthode selon la revendication 4, la méthode comprenant en outre les étapes suivantes mises en œuvre par le serveur :
la réception des données de changement d'informations utilisateur, la détermination du contenu de changement d'informations (303) ; l'interrogation d'au moins un groupe pré-stocké selon le contenu de changement d'informations, la détermination s'il existe un groupe correspondant au contenu de changement d'informations, l'obtention des informations sur un objet cible du groupe (304) ; et l'envoi du contenu de changement d'informations à l'objet cible (305).

7. Serveur (50) comprenant : une première unité de communication (51), une unité de mappage (52) et une unité de poussée (53) ; où la première unité de communication (51) est agencée pour recevoir des données d'informations synchronisées par un client (60), les données d'informations comprennent au moins une donnée de groupe, et chaque donnée de groupe comprend une relation de mappage entre des catégories d'informations utilisateur correspondant à un groupe et des objets cibles dans le groupe, et une clé correspondant à chaque objet cible, où la clé correspondant à l'objet cible est générée par l'objet cible et envoyée au client par l'objet cible, lorsque le client envoie un message de requête à l'objet cible pour obtenir une confirmation de l'objet cible, et est envoyée à la première unité de communication par le client,
lorsque le client synchronise les données d'informations ;
la première unité de communication (51) est en outre agencée pour recevoir des données de changement d'informations utilisateur et envoyer les données de changement d'informations utilisateur à l'unité de mappage ; l'unité de mappage (52) est agencée pour stocker les données d'informations reçues par la première unité de communication, déterminer un contenu de changement d'informations selon les données de changement d'informations utilisateur envoyées par la première unité de communication, interroger au moins un groupe pré-stocké selon le contenu de changement d'informations, déterminer s'il existe un groupe correspondant au contenu de changement d'informations, et obtenir des informations sur un objet cible du groupe ; et l'unité de poussée (53) est agencée pour envoyer le contenu de changement d'informations à l'objet cible obtenu par l'unité de mappage, où l'unité de poussée est agencée pour envoyer le contenu de changement d'informations crypté en utilisant la clé correspondant à l'objet cible à l'objet cible obtenu par l'unité de mappage.

8. Serveur selon la revendication 7, où l'unité de mappage est agencée pour déterminer une catégorie d'informations utilisateur correspondante selon le contenu de changement d'informations, interroger au moins une donnée de groupe selon la catégorie d'informations utilisateur, et détermine un groupe correspondant à la catégorie d'informations utilisateur.

9. Serveur selon la revendication 7, où la première unité de communication est en outre agencée pour : envoyer des informations d'invite au client lorsque l'unité de mappage détermine qu'il n'y a pas un groupe correspondant au contenu de changement d'information, où les informations d'invite sont utilisée pour indiquer qu'il n'y a pas un groupe correspondant au contenu de changement d'informations ; et recevoir un message de réponse envoyé par le client ; et
l'unité de mappage est en outre agencée pour n'exécuter aucune opération selon le message de réponse reçu par la première unité de communication ; ou, ré-déterminer s'il existe un groupe correspondant au contenu de changement d'information selon les données d'information transportées dans le message de réponse reçu par la première unité de communication.

10. Client (60) comprenant : une unité de détection (61) e une deuxième unité de communication (62) où, la deuxième unité de communication (62) est agencée pour synchroniser les données d'informations avec un serveur (50), où les données d'informations comprennent au moins une donnée de groupe, et chaque donnée de groupe comprend une relation de mappage entre des catégories d'informations utilisateur correspondant à un groupe et des objets cibles dans le groupe, et une clé correspondant à chaque objet cible, où la clé correspondant à l'objet cible est générée par l'objet cible et envoyée au client par l'objet cible, lorsque le client envoie un message de requête à l'objet cible pour obtenir une confirmation de l'objet cible, et est envoyée au serveur par le client lorsque le client synchronise les données d'informations ;
l'unité de détection (61) est agencée pour détecter si les informations d'utilisateur sont mises à jour et acquérir un contenu de changement d'informations ; et
la deuxième unité de communication est en outre agencée pour envoyer de données de changement d'informations utilisateur au serveur, où les données de changement d'informations d'utilisateur comprennent le contenu de changement d'informations acquis par l'unité de détection et où le contenu de changement d'informations est envoyé par le serveur à un objet cible correspondant, crypté en utilisant une clé correspondant à l'objet cible.

11. Client selon la revendication 10, comprenant en outre une unité de traitement opérationnel (63) ; où,
la deuxième unité de communication est en outre agencée pour : recevoir des informations d'invite, où les informations d'invite sont utilisées pour indiquer qu'il n'y a pas un groupe correspondant au contenu de changement d'informations dans le serveur ; et, elle est en outre agencée pour envoyer un message de réponse au serveur ; et
l'unité de traitement opérationnel est agencée pour : créer un groupe correspondant au contenu de changement d'informations selon une opération utilisateur et déclencher la deuxième unité de communication pour envoyer le message de réponse au serveur, où le message de réponse comprend des données de groupe correspondant au contenu de changement d'informations ; ou, elle est agencée pour déclencher la deuxième unité de communication pour envoyer le message de réponse au serveur, où le message de réponse est utilisé pour indiquer de n'exécuter aucune opération.

12. Système de partage d'informations, où le système comprend : le client (60) selon la revendication 10 et le serveur (50) selon la revendication 7.

13. Support de stockage informatique, stockant des instructions exécutables par ordinateur, où les instructions exécutables par ordinateur sont utilisées pour exécuter la méthode de partage d'informations selon l'une quelconque des revendications de 1 à 3, lorsqu'elles sont exécutées sur un serveur.
